# EUROPEAN PATENT SPECIFICATION

(11) **EP 2 331 613 B1**
(45) Date of publication and mention of the grant of the patent: **20.06.2012**
(21) Application number: 09785140.6
(22) Date of filing: 18.09.2009
(51) Int. Cl.: C08J 7/04, C08K 3/22

(54) **COATED POLYMERIC SUBSTRATES**
BESCHICHTETE POLYMERSUBSTRATE
SUBSTRATS POLYMÈRES D ENDUCTION

(30) Priority: 19.09.2008 GB 0817224
(43) Date of publication of application: 15.06.2011
(73) Proprietor: DuPont Teijin Films U.S. Limited Partnership, Chester, VA 23836 (US)
(72) Inventor: BORIES-AZEAU, Xavier, G., P., Stockton-on-Tees TS17 5GE (GB); WRIGHT, Tina, Darlington Country Durham DL3 7SU (GB)
(74) Representative: Cockerton, Bruce Roger
(86) International application number: PCT/GB2009/002249
(87) International publication number: WO 2010/032021

(56) References cited:
- WO-A-2007/042993
- US-A- 4 967 819
- US-A- 5 908 585
- US-A1- 2008 026 204
- US-B1- 6 416 818
- US-B1- 6 777 477

## Description

The present invention is concerned with a transparent conductive composite film, and a method for the manufacture thereof.

Transparent conductive multi-layer films comprising a support overlaid with a conductive layer containing an electroconductive material are known and have been previously disclosed as useful in the manufacture of photovoltaic cells, EMI shielding screens, and touch screens in electronic equipment (for instance PDAs, mobile phones etc). Typically, the composite films have been produced by sputtering techniques, which are capable of forming conductive layers having low surface resistance. However, sputtering is disadvantageous in that it requires use of bulky and costly apparatus and is associates with a slow deposition rate. Attempts have also been made to manufacture transparent composite films by wet-coating methods, which provide advantages over the sputtering method in terms of higher productivity, lower apparatus and manufacturing costs, and greater efficiency in producing conductive layers of large surface area. In a conventional coating method, a conductive coating solution comprising conductive particles dispersed in a binder resin is applied onto substrate, dried (or sintered) at high-temperature to form a conductive layer, and then compressed. US-5504133 discloses the use of a coating composition comprising conductive particles dispersed in a binder solution comprising a mixed organic solvent consisting of at least one polar solvent and at least one non-polar solvent in which is dissolved a polymer containing an acidic-functional group. Another example of a conventional coating method is described in JP-A-9-109259. US-5908585 teaches a combination of metal oxide particles and conductive hollow carbon micro-fibres dispersed in an organic or inorganic matrix to provide the transparent conductive layer. US-6777477 discloses a transparent conductive tin oxide film on a glass or ceramic substrate, prepared using an aqueous coating solution comprising stannic acid, and further comprising a water-soluble polymeric binder having a polar group which is dissolved in the aqueous solution in the presence of ammonia or a water-soluble amine, wherein the coated substrate is dried and then heated at a temperature of 400 to 700°C in order to crystallise the tin oxide particles to provide conductivity.

One problem with the wet-coating method is that large amounts of binder resin are typically required in order to form the conductive layer. However, relatively high concentrations of binder resin in the binder resin are associated with low concentrations of the conductive particles, and accordingly the conductive layers formed by conventional coating methods have undesirably low conductivity and high resistance. JP-A-8-199096 discloses a coating process for applying a low-resistance conductive layer to a glass substrate which dispenses with the binder component, but sintering is conducted at a temperature which is too high to be used with polymeric substrates. US-6416818 is also directed to the preparation of transparent conductive coatings on non-polymeric substrates and discloses a coating composition comprising relatively low concentrations of binder. US-2005/0112361 and US-2008/0026204 are directed to glass, ceramic and resin substrates and disclose a coating composition comprising conductive particles dispersed in an organic or aqueous solvent in which the volume ratio of conductive particles to polymeric binder is at least 4:1, and preferably the presence of binder is avoided altogether, wherein the coated layer is first dried and then compressed under relatively high pressure at relatively low temperatures in order to provide the transparent conductive layer.

Another problem with conventional coating techniques is that large volumes of organic solvents are typically required, which can be costly, hazardous to handle and environmentally harmful.

It is an object of the present invention to overcome the problems mentioned above, in order to provide transparent conductive coatings which exhibit low sheet resistance. It is a particular object of the invention to provide an alternative or improved transparent conductive film obtained via the wet-coating route. It is a further object of the invention to provide an alternative or improved process for the manufacture of transparent conductive film by the wet-coating method.

According to the present invention, there is provided a composite film comprising a polymeric substrate and a transparent conductive layer, said conductive layer being derived from a coating composition containing:
(i) electrically conductive particles selected from the group consisting of metal oxides and doped metal oxides;
(ii) poly(vinyl alcohol); and
(iii) an aqueous solvent,
wherein the sheet resistance of the conductive layer is no more than 1,000 ohms per square, and
wherein the ratio by weight of said electrically conductive particles to said poly(vinyl alcohol) is defined as W_{M}:W_{P}, and W_{M}:W_{P} is in the range of from about 2.0:1 to about 4.0:1.

According to a further aspect of the present invention, there is provided a process for the manufacture of a composite film comprising a polymeric substrate and a transparent conductive layer having a sheet resistance of no more than 1,000 ohms per square, said process comprising the steps of providing a polymeric substrate and disposing on a surface thereof a coating composition containing:
(i) electrically conductive particles selected from the group consisting of metal oxides and doped metal oxides;
(ii) a poly(vinyl alcohol); and
(iii) an aqueous solvent,
wherein the ratio by weight of said electrically conductive particles to said poly(vinyl alcohol) is defined as W_{M}:W_{P}, and W_{M}:W_{P} is in the range of from about 2.0:1 to about 4.0:1; and then heating the coated substrate to remove the solvent(s), wherein the heating step is conducted at a temperature of no more than 200°C.

The polymeric substrate is a self-supporting film or sheet by which is meant a film or sheet capable of independent existence in the absence of a supporting base. The substrate may be formed from any suitable film-forming material. Thermoplastic polymeric materials are preferred. Such materials include a homopolymer or copolymer of a 1-olefin, such as ethylene, propylene and but-1-ene, a polyamide, a polycarbonate, PVC, PVA, polyacrylates, celluloses and particularly a synthetic linear polyester. The substrate is described in detail below with respect to polyester substrates.

Suitable polyesters are obtainable by condensing one or more dicarboxylic acid(s) or their lower alkyl (up to 6 carbon atoms) diesters with one or more diols. The dicarboxylic acid component typically contains at least one aromatic dicarboxylic acid, which is preferably terephthalic acid, isophathalic acid, phthalic acid, 2,5-, 2,6- or 2,7-naphthalenedicarboxylic acid, and is preferably terephthalic acid or 2,6-naphthalenedicarboxylic acid. The polyester may also contain one or more residues derived from aliphatic dicarboxylic acids, such as succinic acid, glutaric acid, adipic acid, pimelic acid, suberic acid, azeleic acid or sebacic acid. The diol(s) is/are preferably selected from aliphatic and cycloaliphatic glycols, e.g. ethylene glycol, 1,3-propanediol, 1,4-butanediol, neopentyl glycol and 1,4-cyclohexanedimethanol, preferably from aliphatic glycols. Preferably the polyester contains only one glycol, preferably ethylene glycol. Preferred homopolyesters are polyesters of 2,6-naphthalenedicarboxylic acid or terephthalic acid with ethylene glycol. Formation of the polyester is conveniently effected in a known manner by condensation or ester interchange, generally at temperatures up to about 295°C.

Formation of the substrate may be effected by conventional techniques well-known in the art. Conveniently, formation of the substrate is effected by extrusion, in accordance with the procedure described below. In general terms the process comprises the steps of extruding a layer of molten polymer, quenching the extrudate and orienting the quenched extrudate in at least one direction. The substrate may be uniaxially-oriented, but is more typically biaxially-oriented. Orientation may be effected by any process known in the art for producing an oriented film, for example a tubular or flat film process. Biaxial orientation is effected by drawing in two mutually perpendicular directions in the plane of the film to achieve a satisfactory combination of mechanical and physical properties. In a tubular process, simultaneous biaxial orientation may be effected by extruding a thermoplastics polyester tube which is subsequently quenched, reheated and then expanded by internal gas pressure to induce transverse orientation, and withdrawn at a rate which will induce longitudinal orientation. In the preferred flat film process, the film-forming polyester is extruded through a slot die and rapidly quenched upon a chilled casting drum to ensure that the polyester is quenched to the amorphous state. Orientation is then effected by stretching the quenched extrudate in at least one direction at a temperature above the glass transition temperature of the polyester. Sequential orientation may be effected by stretching a flat, quenched extrudate firstly in one direction, usually the longitudinal direction, i.e. the forward direction through the film stretching machine, and then in the transverse direction. Forward stretching of the extrudate is conveniently effected over a set of rotating rolls or between two pairs of nip rolls, transverse stretching then being effected in a stenter apparatus. Stretching is generally effected so that the dimension of the oriented film is from 2 to 5, more preferably 2.5 to 4.5 times its original dimension in the or each direction of stretching. Typically, stretching is effected at temperatures higher than the Tg of the polyester, preferably about 15°C higher than the Tg. Greater draw ratios (for example, up to about 8 times) may be used if orientation in only one direction is required. It is not necessary to stretch equally in the machine and transverse directions although this is preferred if balanced properties are desired.

A stretched film may be, and preferably is, dimensionally stabilised by heat-setting under dimensional support at a temperature above the glass transition temperature of the polyester but below the melting temperature thereof, to induce crystallisation of the polyester. During the heat-setting, a small amount of dimensional relaxation may be performed in the transverse direction, TD by a procedure known as "toe-in". Toe-in can involve dimensional shrinkage of the order 2 to 4% but an analogous dimensional relaxation in the process or machine direction, MD is difficult to achieve since low line tensions are required and film control and winding becomes problematic. The actual heat-set temperature and time will vary depending on the composition of the film and its desired final thermal shrinkage but should not be selected so as to substantially degrade the toughness properties of the film such as tear resistance. Within these constraints, a heat set temperature of about 180° to 245°C is generally desirable. The film may also, and indeed preferably is, further stabilized through use of an online relaxation stage. Alternatively the relaxation treatment can be performed off-line. In this additional step, the film is heated at a temperature lower than that of the heat-setting stage, and with a much reduced MD and TD tension. Film thus processed will exhibit a smaller thermal shrinkage than that produced in the absence of such post heat-setting relaxation.

In one embodiment, heat-setting and heat-stabilisation of the biaxially stretched film is conducted as follows. After the stretching steps have been completed, heat-setting is effected by dimensionally restraining the film at a tension in the range of about 19 to about 75 kg/m, preferably about 45 to about 50 kg/m of film width, using a heat-set temperature preferably from about 135° to about 250°C, more preferably 235-240°C and a heating duration typically in the range of 5 to 40 secs, preferably 8 to 30 secs. The heat-set film is then heat-stabilised by heating it under low tension, preferably such that the tension experienced by the film is less than 5 kg/m, preferably less than 3.5 kg/m, more preferably in the range of from 1 to about 2.5 kg/m, and typically in the range of 1.5 to 2 kg/m of film width, typically using a temperature lower than that used for the heat-setting step and selected to be in the range from about 135°C to 250°C, preferably 190 to 250°C, more preferably 200 to 230°C, and more preferably at least 215°C, typically 215 to 230°C, and for a duration of heating typically in the range of 10 to 40 sec, with a duration of 20 to 30 secs being preferred.

A heat-set, heat-stabilised film exhibits a very low residual shrinkage and consequently high dimensional stability. Preferably, the film has a shrinkage at 30 mins at 230°C, measured as defined herein, of less than 1%, preferably less than 0.75%, preferably less than 0.5%, preferably less than 0.25%, and more preferably less than 0.1%. It will be appreciated that these dimensional stability characteristics refer to the uncoated heat-stabilised, heat-set, biaxially oriented polyester substrate.

The polyester substrate may conveniently contain any of the additives conventionally employed in the manufacture of polyester films. Thus, agents such as cross-linking agents, dyes, pigments, voiding agents, lubricants, anti-oxidants, radical scavengers, UV absorbers, thermal stabilisers, flame retardants and inhibitors, anti-blocking agents, surface active agents, slip aids, optical brighteners, gloss improvers, prodegradents, viscosity modifiers and dispersion stabilisers may be incorporated as appropriate. The film may comprise a particulate filler which can improve handling and windability during manufacture. The particulate filler may, for example, be a particulate inorganic filler (e.g. metal or metalloid oxides, such as alumina, silica and titania, calcined china clay and alkaline metal salts, such as the carbonates and sulphates of calcium and barium). The components of the composition of a layer may be mixed together in a conventional manner. For example, by mixing with the monomeric reactants from which the film-forming polyester is derived, or the components may be mixed with the polyester by tumble or dry blending or by compounding in an extruder, followed by cooling and, usually, comminution into granules or chips. Masterbatching technology may also be employed.

The substrate should be optically clear, preferably having a % of scattered visible light (haze) of <10%, preferably <6%, more preferably <3.5 % and particularly <1.5%, measured according to the standard ASTM D 1003. Thus, any particulate filler is typically present in only small amounts, generally not exceeding 0.5% and preferably less than 0.2% by weight of a given layer.

The exposed surface of the substrate may, if desired, be subjected to a chemical or physical surface-modifying treatment to improve the bond between that surface and the subsequently applied layer. For example, the exposed surface of the substrate can be exposed to a high voltage electrical stress accompanied by corona discharge. Corona discharge may be effected in air at atmospheric pressure with conventional equipment using a high frequency, high voltage generator, preferably having a power output of from 1 to 20 kW at a potential of 1 to 100 kV. Discharge is conventionally accomplished by passing the film over a dielectric support roller at the discharge station at a linear speed preferably of 1.0 to 500 m per minute. The discharge electrodes may be positioned 0.1 to 10.0 mm from the moving film surface. Typically, however, no such surface-modifying treatment is effected, and the coating composition described herein is coated directly onto the surface of the substrate.

The thickness of the substrate is preferably in the range of about 10 to 300µm.

The electrically conductive particles of the conductive layer are preferably particles of indium tin oxide (i.e. tin-doped indium oxide), antimony tin-oxide and aluminium zinc oxide, and preferably indium-tin oxide (ITO). Other examples of inorganic conductive particles useful in the present invention include tin oxide, indium oxide, zinc oxide, cadmium oxide, and fluorine-doped tin oxide (FTO). A plurality of different types of particles may be used as the conductive particles, but typically only one type of particle is used. In any event, all electrically conductive particles present in the coating composition and conductive layer are selected from the group consisting of metal oxides and doped metal oxides. The particle size is typically not more than 1 µm, preferably not more than 0.5 µm, preferably not more than 100nm and typically in the range of 1-100 nm. Preferably the particles are spherical or substantially spherical in shape.

The binder used in the present invention is poly(vinyl alcohol) (PVA), preferably having an average molecular weight (M_{W}) of from about 1,000 to about 5,000,000, preferably no more than about 2,000,000, more preferably no more than 100,000, more preferably at least about 5,000, and typically about 10,000 to about 30,000.

The ratio of the electrically conductive particles to the poly(vinyl alcohol) binder is critical, and the ratio by weight is referred to herein as W_{M}:W_{P}. The inventors have found that W_{M}:W_{P} according to the present invention is in the range of from about 2.0:1 to about 4.0:1, preferably in the range of from about 3.0:1 to about 4.0:1, more preferably in the range of from about 3.2:1 to about 3.8:1 in order to provide the target conductivity. In terms of the pre-dispersion volume, the volume ratio of the conductive particles to the PVA resin (referred to herein as V_{M}:V_{P}) is typically no more than 4:1. The selection of firstly the identities of the conductive particle and binder and secondly the relative amounts of these components in the layer provide an unexpected improvement in conductivity, even prior to or without compression of the composite film, which is not seen with other compositions. Thus, in one embodiment, the sheet resistance referred to herein is that of the coated and dried composite film comprising said polymeric substrate and said transparent conductive layer in an uncompressed state.

Within those constraints, the coating composition preferably comprises:
(i) said electrically conductive particles in an amount of from about 10 to about 30%, preferably from about 15 to about 25%, by weight of the total coating composition; and
(ii) said poly(vinyl alcohol) in an amount of from about 1 to about 10 %, preferably from about 3 to about 7 %, by weight of the total coating composition.

The solvent of the conductive coating composition is an aqueous solvent, i.e. a solvent which either consists of water or comprises water and one or more co-solvents. The co-solvents are preferably selected from water-soluble or water-miscible solvents, and are typically polar. Suitable co-solvents are selected from alcohols, acetone, butan-2-one, pentan-2-one, pentan-3-one, tetrahydrofuran, N-methylformamide, N,N-dimethyl formamide, N,N-dimethylacetamide, N-methylpyrrolidone and dimethylsulfoxide. Preferred alcohols are selected from methanol, ethanol, propan-1-ol, propan-2-ol, butan-1-ol, 2-methoxyethan-1-ol, 2-ethoxyethan-1-ol, 1-methoxypropan-1-ol, 1-ethoxypropan-1-ol, ethane-1,2-diol, propane-1,3-diol and propane-1,2,3-triol. In one embodiment, the co-solvent is selected from methanol, ethanol, propan-2-ol, acetone and tetrahydrofuran. In a preferred embodiment, the solvent consists essentially of water.

Other additives may be incorporated in the coating composition, as appropriate, such as UV absorbers, surfactants and dispersion aids, although any such additive should be selected from those which do not impair the electrical conductivity.

The conductive coating composition is an aqueous dispersion suitably obtained by preparing a dispersion of the conductive particles in the solvent, and separately preparing an aqueous solution of the poly(vinyl alcohol) binder, which are then mixed. Preferably, the dispersion of the conductive particles is added to the PVA solution, followed by vigorous agitation of the mixture. The dispersion is then applied to the substrate using conventional coating techniques, including gravure roll coating, reverse roll coating, dip coating, bead coating, extrusion-coating, melt-coating or electrostatic spray coating. The coated substrate is then dried, typically at a temperature of from about 100°C to about 200°C, preferably from about 150°C to about 200°C, and this is normally effected in an oven. Typical durations of heating are between about 5 minutes and 1 hour, depending on the temperature used. It is surprising that low sheet resistance can be achieved using these relatively low heating temperatures and without compression of the conductive layer

The composite film comprising substrate and conductive layer is optionally compressed, in order to increase both the strength and the conductivity of the layer, and this can also improve the adhesion of the conductive layer to the substrate. The compression force is preferably at least 44 N/mm², more preferably at least 135 N/mm², more preferably at least 180 N/mm², but typically no more than 1000 N/mm². Compressing may be performed at ambient temperatures (i.e. between about 15 and 40°C, more typically between about 18 and 25°C). The compression can be effected using conventional methods, including sheet pressing and roll pressing, and preferably by roll pressing in which the film to be compressed is held between rolls and compressed as the rolls rotate, thereby allowing roll-to-roll production. In one embodiment, the composite film comprising substrate and conductive layer is not compressed.

The conductive layer may be formed on both sides of the substrate.

The thickness of the conductive layer is typically no more than about 40 µm, more typically no more than about 30 µm, and preferably in the range of from about 0.1µm to about 10 µm.

The sheet resistance of the conductive layer is no more than 1,000 ohms per square, preferably no more than 750 ohms per square, preferably no more than 500 ohms per square, preferably no more than 250 ohms per square, and most preferably less than 100 ohms per square. In one embodiment, the sheet resistance is at least 1 ohm per square.

The composite film comprising polymeric substrate and conductive layer preferably exhibits a % of scattered visible light (haze) of <50%, preferably <40%, more preferably <30 %, more preferably <20 %, and particularly <10%, measured according to the standard ASTM D 1003, and/or a total luminous transmission over the visible range (TLT) of at least 60%, preferably at least 70%, preferably at least 80%, and preferably at least 90%.

The conductive layer can optionally be provided with a protective hard-coat layer, and such layers are well-known in the art, including for instance silicone-, acrylic- and melamine-based thermosetting compositions, and UV-curable compositions such as acrylate-containing compositions.

### Property Measurement

The following analyses were used to characterize the films described herein:
(i) Clarity was evaluated by measuring total luminance transmission (TLT) and haze (% of scattered transmitted visible light) through the total thickness of the film using an M57D spherical hazemeter (Diffusion Systems) according to the standard test method ASTM D1003.
(ii) Sheet resistance (ohms/square) of the conductive layer was measured using a linear four point probe (Jandel Model RM2) according to ASTM F390-98 (2003).
(iii) Thermal shrinkage was assessed for film samples of dimensions 200mm x 10 mm which were cut in specific directions relative to the machine and transverse directions of the film and marked for visual measurement. The longer dimension of the sample (i.e. the 200mm dimension) corresponds to the film direction for which shrinkage is being tested, i.e. for the assessment of shrinkage in the machine direction, the 200 mm dimension of the test sample is oriented along the machine direction of the film. After heating the specimen to the predetermined temperature (by placing in a heated oven at that temperature) and holding for an interval of 30 minutes, it was cooled to room temperature and its dimensions remeasured manually. The thermal shrinkage was calculated and expressed as a percentage of the original length.

The invention is further illustrated by the following examples. The examples are not intended to limit the invention as described above. Modification of detail may be made without departing from the scope of the invention.

### EXAMPLES

### Control 1

A 50 wt% aqueous dispersion of ITO nanoparticles (NanoTek I1200W, Nanophase Technologies) was applied onto a 125 µm heat-stabilised poly(ethylene terephthalate) film (ST504, DuPont Teijin Films) using a Meyer rod bar number 4, corresponding to an approximate wet coat thickness of 36 µm. The coated film was placed in an oven set at 180 °C and cured for 5 minutes.

### Comparative Example 1

To 1.00 g of a 50 wt% aqueous dispersion of ITO nanoparticles (NanoTek I1200W, Nanophase Technologies) was added 0.50 g of a 24 wt% aqueous solution of poly(vinyl alcohol). The coating preparation was vigorously agitated and then applied onto a 125 µm heat-stabilised poly(ethylene terephthalate) film using a Meyer rod bar number 4. The coated film was placed in an oven set at 180 °C and cured for 5 minutes.

### Comparative Example 2

To 1.00 g of a 50 wt% aqueous dispersion of ITO nanoparticles (NanoTek I1200W, Nanophase Technologies) was added 0.10 g of a 10 wt% aqueous solution of poly(N-isopropyl acrylamide). The coating preparation was vigorously agitated and then applied onto a 125 µm heat-stabilised poly(ethylene terephthalate) film using a Meyer rod bar number 4. The coated film was placed in an oven set at 180 °C and cured for 5 minutes.

### Comparative Example 3

To 0.80 g of a 50 wt% aqueous dispersion of ITO nanoparticles (NanoTek I1200W, Nanophase Technologies) was added 0.16 g of a 25 wt% solution of poly(2-hydroxyethyl methacrylate) in ethanol. The coating preparation was vigorously agitated and then applied onto a 125 µm heat-stabilised poly(ethylene terephthalate) film using a Meyer rod bar number 4. The coated film was placed in an oven set at 180 °C and cured for 5 minutes.

### Comparative Example 4

To 1.00 g of a 50 wt% aqueous dispersion of ITO nanoparticles (NanoTek I1200W, Nanophase Technologies) was added 0.10 g of a 24 wt% aqueous solution of poly(N-vinyl pyrrolidone). The coating preparation was vigorously agitated and then applied onto a 125 µm heat-stabilised poly(ethylene terephthalate) film using a Meyer rod bar number 4. The coated film was placed in an oven set at 180 °C and cured for 5 minutes.

### Comparative Example 5

To 1.20 g of a 50 wt% aqueous dispersion of ITO nanoparticles (NanoTek I1200W, Nanophase Technologies) was added 0.80 g of a 25 wt% solution of a copolymer of vinyl alcohol and vinyl acetate with 40 mol% vinyl alcohol content (from Kuraray, trade mark: LM-15) in ethanol. The coating preparation was vigorously agitated and then applied onto a 125 µm heat-stabilised poly(ethylene terephthalate) film using a Meyer rod bar number 4. The coated film was placed in an oven set at 180 °C and cured for 5 minutes.

### Control 2

A 25 wt% dispersion of ITO nanoparticles in isopropanol (VP AdNano ITO DIPA, Degussa) was applied onto a 125 µm heat-stabilised poly(ethylene terephthalate) film using a Meyer rod bar number 5, corresponding to an approximate wet coat thickness of 50 µm. The coated film was placed in an oven set at 180 °C and cured for 5 minutes.

### Comparative Example 6

To 1.00 g of a 25 wt% dispersion of ITO nanoparticles in isopropanol (VP AdNano ITO DIPA, Degussa) was added 0.20 g of a 25 wt% solution of poly(N-vinyl pyrrolidone) in isopropanol. The coating preparation was vigorously agitated and then applied onto a 125 µm heat-stabilised poly(ethylene terephthalate) film using a Meyer rod bar number 5. The coated film was placed in an oven set at 180 °C and cured for 5 minutes.

### Comparative Example 7

To 1.00 g of a 25 wt% dispersion of ITO nanoparticles in isopropanol (VP AdNano ITO DIPA, Degussa) was added 0.20 g of a 25 wt% solution of poly(N-vinyl pyrrolidone) in tetrahydrofuran. The coating preparation was vigorously agitated and then applied onto a 125 µm heat-stabilised poly(ethylene terephthalate) film using a Meyer rod bar number 5. The coated film was placed in an oven set at 180 °C and cured for 5 minutes.

### Control 3

A 25 wt% aqueous dispersion of ITO nanoparticles (VP AdNano ITO DW, Degussa) was applied onto a 125 µm heat-stabilised poly(ethylene terephthalate) film using a Meyer rod bar number 8, corresponding to an approximate wet coat thickness of 100 µm. The coated film was placed in an oven set at 180 °C and cured for 5 minutes.

### Example 1

To 1.40 g of a 25 wt% aqueous dispersion of ITO nanoparticles (VP AdNano ITO DW, Degussa) was added 0.40 g of a 24 wt% aqueous solution of poly(vinyl alcohol). The coating preparation was vigorously agitated and then applied onto a 125 µm heat-stabilised poly(ethylene terephthalate) film using a Meyer rod bar number 8. The coated film was placed in an oven set at 180 °C and cured for 5 minutes.

### Control 4

A 25 wt% aqueous dispersion of ITO nanoparticles (VP AdNano ITO DW, Degussa) was applied onto a 125 µm heat-stabilised poly(ethylene terephthalate) film using a Meyer rod bar number 5. The coated film was placed in an oven set at 180 °C and cured for 10 minutes.

### Comparative Example 8

To 1.40 g of a 25 wt% aqueous dispersion of ITO nanoparticles (VP AdNano ITO DW, Degussa) was added 0.40 g of a 10 wt% aqueous solution of poly(N-ethyl oxazoline). The coating preparation was vigorously agitated and then applied onto a 125 µm heat-stabilised poly(ethylene terephthalate) film using a Meyer rod bar number 5. The coated film was placed in an oven set at 180 °C and cured for 5 minutes.

### Control 5

A 25 wt% aqueous dispersion of ITO nanoparticles (VP AdNano ITO DW, Degussa) was applied onto a 125 µm heat-stabilised poly(ethylene terephthalate) film using a Meyer rod bar number 5. The coated film was placed in an oven set at 180 °C and cured for 20 minutes.

### Comparative Example 9

To 1.00 g of a 25 wt% aqueous dispersion of ITO nanoparticles (VP AdNano ITO DW, Degussa) was added 0.25 g of a 25 wt% aqueous solution of poly(ethylene glycol). The coating preparation was vigorously agitated and then applied onto a 125 µm heat-stabilised poly(ethylene terephthalate) film using a Meyer rod bar number 5. The coated film was placed in an oven set at 180 °C and cured for 20 minutes.

### Comparative Example 10

To 0.90 g of a 25 wt% aqueous dispersion of ITO nanoparticles (VP AdNano ITO DW, Degussa) was added 0.30 g of a 5 wt% aqueous solution of poly(sodium acrylate). The coating preparation was vigorously agitated and then applied onto a 125 µm heat-stabilised poly(ethylene terephthalate) film using a Meyer rod bar number 5. The coated film was placed in an oven set at 180 °C and cured for 20 minutes.

The composite films described above were analysed according to the test methods herein and the results are presented in Table 1.

**TABLE 1**

| Example | ITO dispersion (A) | | Polymer solution (B) | | | | (A) / (B) w/w | ITO:polymer w/w | Mb | Temp (°C) | Time (min) | SR/1000 (ohm/sq) | TLT (%) | Haze (%) |
|---|---|---|---|---|---|---|---|---|---|---|---|---|---|---|
| | solvent | wt% | Name | Mw | solvent | wt% | | | | | | | | |
| Control 1 | water | 50% | - | - | - | - | - | - | 4 | 180 | 5 | 1,800,000 | 53 | 60 |
| Comp.Ex.1 | water | 50% | PVA | 20,000 | water | 24% | 2:1 | 4.17 | 4 | 180 | 5 | 1,700 | 79 | 30 |
| Comp.Ex.2 | water | 50% | PNIPAm | 10,000 | water | 10% | 10:1 | 50 | 4 | 180 | 5 | 1,200 | 61 | 36 |
| Comp.Ex.3 | water | 50% | PHEMA | 15,000 | EtOH | 25% | 5:1 | 10 | 4 | 180 | 5 | 2,700 | 39 | 43 |
| Comp.Ex.4 | water | 50% | PVP | 40,000 | water | 24% | 10:1 | 20.83 | 4 | 180 | 5 | 2,600 | 63 | 39 |
| Comp.Ex.5 | water | 50% | LM15 | 70,000 | EtOH | 25% | 1.5:1 | 3 | 4 | 180 | 5 | 8,500 | 74 | 36 |
| | | | | | | | | | | | | | | |
| Control 2 | IPA | 25% | - | - | - | - | - | - | 5 | 180 | 5 | 4,800,000 | 82 | 9 |
| Comp.Ex.6 | IPA | 25% | PVP | 1,300,000 | IPA | 25% | 5:1 | 5 | 5 | 180 | 5 | 41,000 | 79 | 12 |
| Comp.Ex.7 | IPA | 25% | PMMA | 10,000 | THF | 25% | 5:1 | 5 | 5 | 180 | 5 | 56,000 | 86 | 6 |
| | | | | | | | | | | | | | | |
| Control 3 | water | 25% | - | - | - | - | - | - | 8 | 180 | 5 | 13,000 | 77 | 18 |
| Example 1 | water | 25% | PVA | 20,000 | water | 24% | 3.5:1 | 3.65 | 8 | 180 | 5 | 840 | 67 | 44 |
| | | | | | | | | | | | | | | |
| Control 4 | water | 25% | - | - | - | - | - | - | 5 | 180 | 10 | 12,000 | 83 | 13 |
| Comp.Ex.8 | water | 25% | PNEO | 5,000 | water | 10% | 3.5:1 | 9 | 5 | 180 | 10 | 7,400 | 73 | 36 |
| | | | | | | | | | | | | | | |
| Control 5 | water | 25% | - | - | - | - | - | - | 5 | 180 | 20 | 10,000 | 84 | 19 |
| Comp.Ex.9 | water | 25% | PEG | 8,000 | water | 25% | 4:1 | 4 | 5 | 180 | 20 | 8,200 | 79 | 22 |
| Comp.Ex.10 | water | 25% | PNaAA | 15,000 | water | 5% | 3:1 | 15 | 5 | 180 | 20 | 25,000 | 78 | 31 |

## Claims

1. A composite film comprising a polyester substrate and a transparent conductive layer, said conductive layer being derived from a coating composition containing:
(i) electrically conductive particles selected from the group consisting of metal oxides and doped metal oxides;
(ii) poly(vinyl alcohol); and
(iii)an aqueous solvent,
wherein the sheet resistance of the conductive layer is no more than 1,000 ohms per square as measured according to ASTM F390-98 (2003), and
wherein the ratio by weight of said electrically conductive particles to said poly(vinyl alcohol) is defined as W_{M}:W_{P}, and W_{M}:W_{P} is in the range of from about 2.0:1 to about 4.0:1.

2. The composite film according to claim 1 wherein the sheet resistance of the conductive layer is at least 1 ohm per square.

3. The composite film according to any preceding claim wherein the film exhibits a total light transmission over the visible range (TLT) of at least 60%, as measured according to ASTM D1003.

4. The composite film according to any preceding claim wherein the film exhibits a haze of no more than 50%, as measured according to ASTM D1003.

5. The composite film according to any preceding claim, wherein the electrically conductive particles are selected from indium tin oxide, antimony tin-oxide and aluminium zinc oxide.

6. The composite film according to any preceding claim, wherein the electrically conductive particles are selected from indium tin oxide.

7. The composite film according to any preceding claim wherein the average primary particle diameter of the electrically conductive particles is no greater than 100 nm.

8. The composite film according to any preceding claim wherein the poly(vinyl alcohol) has average molecular weight (M_{W}) of from 10,000 to 30,000.

9. The composite film according to any preceding claim wherein the solvent comprises water and further comprises one or more co-solvent(s) selected from a water-soluble or water-miscible solvent(s), and preferably selected from alcohols, acetone, butan-2-one, pentan-2-one, pentan-3-one, tetrahydrofuran, N-methylformamide, N,N-dimethyl formamide, N,N-dimethylacetamide, N-methylpyrrolidone, dimethylsulfoxide, and mixtures thereof.

10. The composite film according to claim 9 wherein a co-solvent is selected from methanol, ethanol, propan-1-ol, propan-2-ol, butan-1-ol, 2-methoxyethan-1-ol, 2-ethoxyethan-1-ol, 1-methoxypropan-1-ol, 1-ethoxypropan-1-ol, ethane-1,2-diol, propane-1,3-diol and propane-1,2,3-triol.

11. The composite film according to claim 9 wherein a co-solvent is selected from methanol, ethanol, propan-2-ol, acetone and tetrahydrofuran.

12. The composite film according to any of claims 1 to 8 wherein the solvent consists of water.

13. The composite film according to any preceding claim wherein the transparent conductive layer has a thickness no more than 10 µm.

14. The composite film according to any preceding claim wherein the coating composition contains:
(i) said electrically conductive particles in an amount of from about 10 to about 30% by weight of the total coating composition; and
(ii) said poly(vinyl alcohol) in an amount of from about 1 to about 10 % by weight of the total coating composition.

15. The composite film according to any preceding claim wherein the polyester is selected from poly(ethylene terephthalate) and poly(ethylene 2,6-naphthalate).

16. The composite film according to any preceding claim wherein W_{M}:W_{P} is in the range of from about 3.0:1 to about 4.0:1.

17. The composite film according to any preceding claim wherein W_{M}:W_{P} is in the range of from about 3.2:1 to about 3.8:1.

18. A process for the manufacture of a composite film comprising a polyester substrate and a transparent conductive layer having a sheet resistance of no more than 1,000 ohms per square as measured according to ASTM F390-98 (2003), said process comprising the steps of providing a polyester substrate and disposing on a surface thereof a coating composition containing:
(i) electrically conductive particles selected from the group consisting of metal oxides and doped metal oxides;
(ii) a poly(vinyl alcohol); and
(iii) an aqueous solvent,
wherein the ratio by weight of said electrically conductive particles to said poly(vinyl alcohol) is defined as W_{M}:W_{P}, and W_{M}:W_{P} is in the range of from about 2.0:1 to about 4.0:1; and then heating the coated substrate to remove the solvent(s), wherein the heating step is conducted at a temperature of no more than 200°C.

## Patentansprüche

1. Verbundfolie, umfassend ein Polyestersubstrat und eine transparente leitfähige Schicht, wobei sich die leitfähige Schicht von einer Beschichtungszusammensetzung, die
(i) elektrisch leitfähige Teilchen aus der Gruppe bestehend aus Metalloxiden und dotierten Metalloxiden;
(ii) Poly(vinylalkohol) und
(iii) ein wässriges Lösungsmittel enthält, ableitet,
wobei der gemäß ASTM F390-98 (2003) gemessene Flächenwiderstand der leitfähigen Schicht höchstens 1000 Ohm pro Quadrat beträgt und
wobei das Gewichtsverhältnis der elektrisch leitfähigen Teilchen zu dem Poly(vinylalkohol) als W_{M}:W_{P} definiert ist und W_{M}:W_{P} im Bereich von etwa 2,0:1 bis etwa 4,0:1 liegt.

2. Verbundfolie nach Anspruch 1, wobei der Flächenwiderstand der leitfähigen Schicht höchstens 1 Ohm pro Quadrat beträgt.

3. Verbundfolie nach einem der vorhergehenden Ansprüche, wobei die Folie eine gemäß ASTM D1003 gemessene Gesamtlichttransmission über den sichtbaren Bereich (total light transmission, TLT) von mindestens 60% aufweist.

4. Verbundfolie nach einem der vorhergehenden Ansprüche, wobei die Folie eine gemäß ASTM D1003 gemessene Trübung (Haze) von höchstens 50% aufweist.

5. Verbundfolie nach einem der vorhergehenden Ansprüche, wobei die elektrisch leitfähigen Teilchen unter Indiumzinnoxid, Antimonzinnoxid und Aluminiumzinkoxid ausgewählt sind.

6. Verbundfolie nach einem der vorhergehenden Ansprüche, wobei die elektrisch leitfähigen Teilchen unter Indiumzinnoxid ausgewählt sind.

7. Verbundfolie nach einem der vorhergehenden Ansprüche, wobei der mittlere Primärteilchendurchmesser der elektrisch leitfähigen Teilchen höchstens 100 nm beträgt.

8. Verbundfolie nach einem der vorhergehenden Ansprüche, wobei der Poly(vinylalkohol) ein mittleres Molekulargewicht (M_{W}) von 10.000 bis 30.000 aufweist.

9. Verbundfolie nach einem der vorhergehenden Ansprüche, wobei das Lösungsmittel Wasser und ferner ein oder mehrere Cosolventien, die unter wasserlöslichen oder wassermischbaren Lösungsmitteln und vorzugsweise unter Alkoholen, Aceton, Butan-2-on, Pentan-2-on, Pentan-3-on, Tetrahydrofuran, N-Methylformamid, N,N-Dimethylformamid, N,N-Dimethylacetamid, N-Methylpyrrolidon, Dimethylsulfoxid und Mischungen davon ausgewählt sind, umfasst.

10. Verbundfolie nach Anspruch 9, wobei ein Cosolvens unter Methanol, Ethanol, Propan-1-ol, Propan-2-ol, Butan-1-ol, 2-Methoxyethan-1-ol, 2-Ethoxyethan-1-ol, 1-Methoxypropan-1-ol, 1-Ethoxypropan-1-ol, Ethan-1,2-diol, Propan-1,3-diol und Propan-1,2,3-triol ausgewählt ist.

11. Verbundfolie nach Anspruch 9, wobei ein Cosolvens unter Methanol, Ethanol, Propan-2-ol, Aceton und Tetrahydrofuran ausgewählt ist.

12. Verbundfolie nach einem der Ansprüche 1 bis 8, wobei das Lösungsmittel aus Wasser besteht.

13. Verbundfolie nach einem der vorhergehenden Ansprüche, wobei die transparente leitfähige Schicht eine Dicke von höchstens 10 µm aufweist.

14. Verbundfolie nach einem der vorhergehenden Ansprüche, wobei die Beschichtungszusammensetzung
(i) die elektrisch leitfähigen Teilchen in einer Menge von etwa 10 bis etwa 30 Gew.-%, bezogen auf die gesamte Beschichtungszusammensetzung; und
(ii) den Poly(vinylalkohol) in einer Menge von etwa 1 bis etwa 10 Ges.-%, bezogen auf die gesamte Beschichtungszusammensetzung;
enthält.

15. Verbundfolie nach einem der vorhergehenden Ansprüche, wobei der Polyester unter Poly(ethylenterephthalat) und Poly(ethylen-2,6-naphthalat) ausgewählt ist.

16. Verbundfolie nach einem der vorhergehenden Ansprüche, wobei W_{M}:W_{P} im Bereich von etwa 3,0:1 bis etwa 4,0:1 liegt.

17. Verbundfolie nach einem der vorhergehenden Ansprüche, wobei W_{M}:W_{P} im Bereich von etwa 3,2:1 bis etwa 3,8:1 liegt.

18. Verfahren zur Herstellung einer Verbundfolie, die ein Polyestersubstrat und eine transparente leitfähige Schicht mit einem gemäß ASTM F390-98 (2003) gemessenen Flächenwiderstand von höchstens 1000 Ohm pro Quadrat umfasst, bei dem man ein Polyestersubstrat bereitstellt und auf dessen Oberfläche eine Beschichtungszusammensetzung, die
(i) elektrisch leitfähige Teilchen aus der Gruppe bestehend aus Metalloxiden und dotierten Metalloxiden;
(ii) Poly(vinylalkohol) und
(iii) ein wässriges Lösungsmittel enthält, wobei das Gewichtsverhältnis der elektrisch leitfähigen Teilchen zu dem Poly(vinylalkohol) als W_{M}:W_{P} definiert ist und W_{M}:W_{P} im Bereich von etwa 2,0:1 bis etwa 4,0:1 liegt, abscheidet und das beschichtete Substrat dann zur Entfernung des Lösungsmittels bzw. der Lösungsmittel erhitzt, wobei man den Erhitzungsschritt bei einer Temperatur von höchstens 200°C durchführt.

## Revendications

1. Film composite comprenant un substrat de polyester et une couche conductrice transparente, ladite couche conductrice étant dérivée d'une composition de revêtement contenant :
(i) des particules électriquement conductrices choisies dans le groupe constitué par les oxydes métalliques et les oxydes métalliques dopés ;
(ii) un poly(alcool vinylique) ; et
(iii) un solvant aqueux,
dans lequel la résistance de couche de la couche conductrice ne dépasse pas 1000 ohms par carré, telle que mesurée selon la norme ASTM F390-98 (2003), et
dans lequel le rapport en poids desdites particules électriquement conductrices audit poly(alcool vinylique) est défini comme W_{M}:W_{P}, et W_{M}:W_{P} se situe dans la gamme d'environ 2,0:1 à environ 4,0:1.

2. Film composite selon la revendication 1 dans lequel la résistance de couche de la couche conductrice est d'au moins 1 ohm par carré.

3. Film composite selon l'une quelconque des revendications précédentes, le film présentant une transmission totale de la lumière dans la gamme visible (TLT) d'au moins 60 %, telle que mesurée selon la norme ASTM D1003.

4. Film composite selon l'une quelconque des revendications précédentes, le film présentant un trouble ne dépassant pas 50 %, tel que mesuré selon la norme ASTM D1003.

5. Film composite selon l'une quelconque des revendications précédentes dans lequel les particules électriquement conductrices sont choisies parmi l'oxyde d'indium-étain, l'oxyde d'antimoine-étain et l'oxyde d'aluminium-zinc.

6. Film composite selon l'une quelconque des revendications précédentes dans lequel les particules électriquement conductrices sont choisies parmi l'oxyde d'indium-étain.

7. Film composite selon l'une quelconque des revendications précédentes dans lequel le diamètre moyen de particules primaires des particules électriquement conductrices ne dépasse pas 100 nm.

8. Film composite selon l'une quelconque des revendications précédentes dans lequel le poly(alcool vinylique) a un poids moléculaire moyen (M_{W}) de 10 000 à 30 000.

9. Film composite selon l'une quelconque des revendications précédentes dans lequel le solvant comprend de l'eau et comprend en outre un ou plusieurs cosolvants choisis parmi les solvants solubles dans l'eau et miscibles à l'eau, et de préférence choisi parmi les alcools, l'acétone, la butan-2-one, la pentan-2-one, la pentan-3-one, le tétrahydrofurane, le N-méthylformamide, le N,N-diméthylformamide, le N,N-diméthylacétamide, la N-méthylpyrrolidone, le diméthylsulfoxyde, et les mélanges de ceux-ci.

10. Film composite selon la revendication 9 dans lequel un cosolvant est choisi parmi le méthanol, l'éthanol, le propan-1-ol, le propan-2-ol, le butan-1-ol, le 2-méthoxyéthan-1-ol, le 2-éthoxyéthan-1-ol, le 1-méthoxypropan-1-ol, le 1-éthoxypropan-1-ol, l'éthane-1,2-diol, le propane-1,3-diol et le propane-1,2,3-triol.

11. Film composite selon la revendication 9 dans lequel un cosolvant est choisi parmi le méthanol, l'éthanol, le propan-2-ol, l'acétone et le tétrahydrofurane.

12. Film composite selon l'une quelconque des revendications 1 à 8 dans lequel le solvant se compose d'eau.

13. Film composite selon l'une quelconque des revendications précédentes dans lequel la couche conductrice transparente a une épaisseur ne dépassant pas 10 µm.

14. Film composite selon l'une quelconque des revendications précédentes dans lequel la composition de revêtement contient :
(i) lesdites particules électriquement conductrices dans une quantité d'environ 10 à environ 30 % en poids de la composition de revêtement totale ; et
(ii) ledit poly(alcool vinylique) dans une quantité d'environ 1 à environ 10 % en poids de la composition de revêtement totale.

15. Film composite selon l'une quelconque des revendications précédentes dans lequel le polyester est choisi parmi le poly(téréphtalate d'éthylène) et le poly(2,6-naphtalate d'éthylène).

16. Film composite selon l'une quelconque des revendications précédentes dans lequel W_{M}:W_{P} se situe dans la gamme d'environ 3,0:1 à environ 4,0:1.

17. Film composite selon l'une quelconque des revendications précédentes dans lequel W_{M}:W_{P} se situe dans la gamme d'environ 3,2:1 à environ 3,8:1.

18. Procédé de fabrication d'un film composite comprenant un substrat de polyester et une couche conductrice transparente ayant une résistance de couche ne dépassant pas 1000 ohms par carré, telle que mesurée selon la norme ASTM F390-98 (2003), ledit procédé comprenant les étapes consistant à se procurer un substrat de polyester et disposer sur une surface de celui-ci une composition de revêtement contenant :
(i) des particules électriquement conductrices choisies dans le groupe constitué par les oxydes métalliques et les oxydes métalliques dopés ;
(ii) un poly(alcool vinylique) ; et
(iii) un solvant aqueux,
le rapport en poids desdites particules électriquement conductrices audit poly(alcool vinylique) étant défini comme W_{M}:W_{P}, et W_{M}:W_{P} se situant dans la gamme d'environ 2,0:1 à environ 4,0:1, puis à chauffer le substrat revêtu pour retirer le(s) solvant(s), l'étape de chauffage étant conduite à une température ne dépassant pas 200 °C.
